# FASCICULE DE BREVET EUROPEEN

(11) **EP 4 094 963 B1**
(45) Date de publication et mention de la délivrance du brevet: **30.04.2025**
(21) Numéro de dépôt: 22174260.4
(22) Date de dépôt: 19.05.2022
(51) Int. Cl.: F16H 3/091, B60K 6/40, B60K 6/42, B60K 6/48, B60W 30/19, B60W 20/40, B60K 6/387, B60K 6/36, B60W 20/30, B60W 20/20, B60K 6/547, B60W 10/111, B60W 10/02, B60W 10/08, B60W 10/06

(54) **SOUS-ENSEMBLE HYBRIDE D'ENTRAÎNEMENT D'UN VÉHICULE, GROUPE MOTEUR HYBRIDE ET PROCÉDÉ D'ENTRAÎNEMENT HYBRIDE**
HYBRIDE ANTRIEBSUNTEREINHEIT EINES FAHRZEUGS, HYBRIDE ANTRIEBSGRUPPE UND HYBRIDES ANTRIEBSVERFAHREN
HYBRID SUBASSEMBLY FOR DRIVING A VEHICLE, HYBRID ENGINE UNIT AND HYBRID DRIVING METHOD

(30) Priorité: 27.05.2021 FR 2105505
(43) Date de publication de la demande: 30.11.2022
(73) Titulaire: VALEO EMBRAYAGES, 80009 Amiens (FR)
(72) Inventeur: VASSIEUX, Loic, 80009 Amiens (FR); LHEUREUX, Dominique, 80009 Amiens (FR)
(74) Mandataire: Valeo Powertrain Systems

(56) Documents cités:
- EP-A1- 3 100 891
- WO-A1-2011/154823
- WO-A1-2016/046001
- US-A1- 2014 171 259
- US-A1- 2021 070 280

## Description

### DOMAINE TECHNIQUE DE L'INVENTION

L'invention se rapporte à un sous-ensemble d'entraînement destiné à être positionné entre un moteur, par exemple un moteur thermique, et un ensemble d'une ou plusieurs roues motrices d'un véhicule. Elle se rapporte en particulier, bien que de façon non exclusive, à un tel sous-ensemble destiné à équiper un poids lourd, c'est-à-dire un véhicule routier de plus de 3,5 tonnes, notamment un tracteur routier, ou un porteur.

### ETAT DE LA TECHNIQUE ANTERIEURE

Dans le document AT520019B1 est décrit un ensemble motopropulseur d'un véhicule, comportant un arbre primaire destiné à être entraîné par un moteur du véhicule, un arbre secondaire destiné à entraîner un ensemble d'une ou plusieurs roues motrices du véhicule, et une boîte de transmission comportant une ou plusieurs roues dentées primaires solidaires en rotation de l'arbre primaire ou aptes à être accouplées à l'arbre primaire, une pluralité de roues dentées secondaires solidaires en rotation de l'arbre secondaire ou aptes être accouplées à l'arbre secondaire, et un arbre intermédiaire auquel sont solidarisées en rotation des roues dentées intermédiaires, la ou les roues dentées primaires et les roues dentées secondaires engrenant chacune avec une roue dentée correspondante parmi les roues dentées intermédiaires. L'ensemble motopropulseur comporte en outre une machine électrique réversible liée cinématiquement à l'arbre intermédiaire et apte à fonctionner en générateur de courant pour freiner l'arbre intermédiaire ou en moteur d'entraînement de l'arbre intermédiaire. Une telle machine électrique permet d'envisager différents modes de fonctionnement, et notamment un fonctionnement transitoire de la machine électrique pour freiner ou accélérer l'arbre intermédiaire et favoriser la synchronisation de la boîte de transmission dans les phases de changement de rapport de transmission, un fonctionnement moteur pour assister l'entraînement du moteur principal du véhicule hors des phases de changement de rapport et un fonctionnement de générateur électrique, pour l'alimentation électrique d'accessoires du véhicule ou d'une batterie, notamment dans des phases de freinage du véhicule. Ce type d'ensemble motopropulseur est également décrit, par exemple, dans EP3100891 A1.

Dans le document GB1435517A est décrite une boîte de transmission comportant un arbre de sortie et un arbre de renvoi, ainsi qu'un train d'engrenage entre l'arbre de renvoi et l'arbre de sortie, comportant une première roue dentée solidaire de l'un des deux arbres et une deuxième roue dentée apte à être solidarisée à l'autre arbre par l'intermédiaire d'un crabot. Une machine électrique réversible est accouplée à l'arbre de renvoi de façon permanente et les moyens d'accouplement sont pilotés pour synchroniser la vitesse de la deuxième roue dentée et du crabot avant leur engagement.

Dans ces dispositifs, l'arbre intermédiaire ou l'arbre de renvoi est toujours lié à l'arbre de la machine électrique, ce qui limite les modes de fonctionnement envisageables.

### EXPOSE DE L'INVENTION

L'invention vise à remédier aux inconvénients de l'état de la technique et à proposer une meilleure intégration d'une machine électrique à un arbre intermédiaire de boîte de transmission, permettant d'envisager des modes de fonctionnement précédemment inaccessibles.

Pour ce faire est proposé, selon un premier aspect de l'invention, un sous-ensemble hybride d'entraînement d'un véhicule, du type comportant : au moins un arbre primaire, au moins un arbre secondaire et une boîte de transmission comportant au moins un arbre intermédiaire distinct de l'arbre primaire et de l'arbre secondaire et des trains de roues dentées pour réaliser plusieurs rapports de transmission entre l'arbre primaire et l'arbre secondaire en passant par l'arbre intermédiaire. Le sous-ensemble hybride comporte également un groupe électromoteur comportant au moins une machine électrique réversible, et un dispositif d'accouplement qui, dans au moins une position d'accouplement intermédiaire lie cinématiquement un arbre de sortie de la machine électrique réversible à l'arbre intermédiaire. De façon remarquable, le dispositif d'accouplement dans au moins une position d'accouplement secondaire, lie cinématiquement l'arbre de sortie de la machine électrique réversible à l'arbre secondaire sans passer par l'arbre intermédiaire.

Dans la position d'accouplement secondaire, le dispositif d'accouplement permet une transmission directe et de puissance entre la machine électrique réversible et l'arbre secondaire sans entraînement de l'arbre intermédiaire. Ceci permet d'envisager divers modes de fonctionnement qui seront décrit plus loin, parmi lesquels : un mode d'entraînement électrique permanent de l'arbre secondaire par la machine électrique réversible fonctionnant en moteur, un mode transitoire de maintien de la traction lors des changements de rapport, un mode de freinage régénératif pur minimisant le couple mécanique résistant. Ces modes de fonctionnement s'ajoutent à ceux qui sont accessibles dans la position d'accouplement intermédiaire.

Le dispositif d'accouplement peut comprendre une pluralité de positions d'accouplement et/ou de désaccouplement, par exemple trois positions d'accouplement distinctes, permettant une transmission de puissance en provenance de la machine électrique réversible vers l'arbre intermédiaire ou l'arbre secondaire selon des rapports de transmission différents.

La machine électrique réversible pourra notamment être une machine synchrone à aimants permanents, une machine asynchrone, une machine électrique à réluctance variable ou une machine électrique synchrone à réluctance variable, dite synchro-réluctante.

Suivant un mode de réalisation, le dispositif d'accouplement, dans au moins une position de désaccouplement, désaccouple cinématiquement de manière simultanée l'arbre de sortie de la machine électrique réversible à l'arbre intermédiaire et à l'arbre secondaire. Cette position du dispositif d'accouplement permet de mettre en œuvre des modes de fonctionnement supplémentaires dans lesquels la machine électrique est désaccouplée, soit parce qu'elle n'est pas nécessaire au fonctionnement de la boîte de transmission, soit parce qu'elle est utilisée à d'autres fins, par exemple pour l'entraînement d'un autre organe tournant. Le découplage de la machine électrique permet de limiter l'inertie et le couple résistant au niveau de l'arbre intermédiaire, et de soulager les paliers de guidage de son rotor, ce qui augmente leur durée de vie.

Selon l'invention, le dispositif d'accouplement comprend au moins un mécanisme d'accouplement lié cinématiquement de façon permanente à l'arbre de sortie de la machine électrique réversible, un réducteur de vitesse intermédiaire lié cinématiquement de façon permanente à l'arbre intermédiaire et un réducteur de vitesse secondaire liée cinématiquement de façon permanente à l'arbre secondaire. Le réducteur de vitesse secondaire comprend une roue dentée d'inversion guidée en rotation par un palier de guidage coaxial avec l'arbre intermédiaire.

La machine électrique réversible doit être de préférence dimensionnée de manière à être pleinement opérationnelle pour de larges plages de fonctionnement dans les divers modes de fonctionnement envisagée. Ainsi, on prévoit de façon préférentielle que la machine électrique réversible réponde à un ou plusieurs des critères suivants :
- la machine électrique réversible est apte à développer de façon continue un couple moteur supérieur à 300 Nm, et de préférence supérieure à 350Nm, dans une plage de vitesse de plus de 1000 tr/min, et de préférence de plus de 2000 tr/min comprise ayant une borne inférieure qui est inférieure à 6000 tr/min, et de préférence inférieure à 5000 tr/min, et une borne supérieure qui est supérieure à 6000 tr/min, de préférence supérieure à 7000 tr/min, et de préférence supérieure à 9000 tr/min ;
- la machine électrique réversible est apte à développer un couple résistant supérieur à 400 Nm et de préférence supérieur à 450Nm dans une plage de vitesse de plus de 3000 tr/min, et de préférence de plus de 4000 tr/min ayant une borne inférieure qui est inférieure à 6500 tr/min, et de préférence inférieure à 6000 tr/min et une borne supérieure qui est supérieure à 9000 tr/min, et de préférence supérieure à 10000 tr/min, pendant 30 secondes ;
- la machine électrique réversible est apte à développer un couple moteur supérieur à 50 Nm et de préférence supérieur à 60Nm dans une plage de vitesse de plus de 5500 tr/min, et de préférence de plus de 7000 tr/min ayant une borne inférieure qui est inférieure à 5000 tr/min, et de préférence inférieure à 4500 tr/min et une borne supérieure qui est supérieure à 10000 tr/min, et de préférence supérieure à 11000 tr/min, pendant 5 secondes en régime de transitoire de changement de rapport.

En pratique, le dispositif d'accouplement dans la position d'accouplement intermédiaire lie cinématiquement l'arbre de sortie de la machine électrique réversible à l'arbre intermédiaire avec un rapport de transmission dit intermédiaire alors que le dispositif d'accouplement dans la position d'accouplement secondaire lie cinématiquement la machine électrique réversible à l'arbre secondaire avec un rapport de transmission dit secondaire. Suivant un exemple de réalisation, le dispositif d'accouplement répond à un ou plusieurs des critères suivants :
- le rapport de transmission secondaire est supérieur à 6, et de préférence supérieur ou égal à 8 ;
- le rapport de transmission intermédiaire supérieur 4, et de préférence supérieur ou égal à 6 entre l'arbre intermédiaire et l'arbre de sortie de de la machine électrique réversible ;
- le rapport de transmission secondaire est strictement supérieur au rapport de transmission intermédiaire, de préférence avec un facteur supérieur ou égal à 1,5 entre rapport de transmission secondaire et rapport de transmission intermédiaire.

Il peut être avantageux de disposer de plusieurs rapports de transmission entre la machine électrique réversible et l'arbre intermédiaire et/ou entre la machine électrique réversible et l'arbre secondaire. A cette fin, une ou plusieurs des dispositions suivantes peuvent être prises :
- le dispositif d'accouplement, dans une position d'accouplement intermédiaire supplémentaire, lie cinématiquement la machine électrique réversible à l'arbre intermédiaire avec un rapport de transmission intermédiaire supplémentaire distinct du rapport de transmission intermédiaire ;
- le dispositif d'accouplement, dans une position d'accouplement secondaire supplémentaire, lie cinématiquement la machine électrique réversible à l'arbre secondaire avec un rapport de transmission secondaire supplémentaire distinct du rapport de transmission secondaire.

Suivant un mode de réalisation particulièrement avantageux, le sous-ensemble hybride comporte en outre un organe de prise de force, apte à être entraîné au moins par la machine électrique réversible, de préférence de l'une des manières suivantes :
- l'organe de prise de force est lié cinématiquement de façon permanente à l'arbre intermédiaire ;
- l'organe de prise de force est lié cinématiquement à l'arbre intermédiaire par l'intermédiaire du dispositif d'accouplement en position d'accouplement intermédiaire ;
- l'organe de prise de force est lié cinématiquement à l'arbre de sortie de la machine électrique réversible par l'intermédiaire du dispositif d'accouplement en position d'accouplement intermédiaire.

Suivant ce mode de réalisation, l'organe de prise de force peut être coaxial à l'arbre intermédiaire.

Suivant un autre mode de réalisation particulièrement avantageux, le sous-ensemble hybride peut comporter un organe de prise de force, apte à être entraîné au moins par la machine électrique réversible, l'organe de prise de force étant lié cinématiquement de façon permanente à l'arbre de sortie de la machine électrique réversible.

On peut alors envisager un entraînement de la prise de force par la machine électrique réversible sans recours au moteur principal du véhicule, ce qui permet d'atteindre des vitesses de rotation très nettement supérieures à 1000 tr/min, par exemple supérieures à 1500 tr/min, et le cas échéant jusqu'à 5000 tr/min.

Selon une variante de l'invention, le groupe électromoteur peut comporter deux machines électriques réversibles comprenant chacune un rotor avec un arbre de sortie tournant autour d'un axe de rotation, les deux arbres de sortie engrenant simultanément sur une roue dentée commune disposée parallèlement aux deux axes de rotation, ladite roue dentée commune étant liée cinématiquement en rotation, directement ou indirectement via un engrenage, au dispositif d'accouplement. De cette manière, l'utilisation de deux machines électriques réversibles améliore la capacité de traction du véhicule fonctionnant dans le mode d'entraînement électrique permanent de l'arbre secondaire par la machine électrique réversible.

En pratique, la boîte de transmission peut avantageusement comporter :
- une, ou de préférence plusieurs roues dentées primaires aptes à être accouplées à l'arbre primaire, par exemple par un ou plusieurs mécanismes d'accouplement et de désaccouplement, par exemple des synchroniseurs ou/ des crabots,
- plusieurs roues dentées secondaires aptes être accouplées à l'arbre secondaire, par exemple par un ou plusieurs mécanismes d'accouplement et de désaccouplement, par exemple des synchroniseurs ou/ des crabots,
- des roues dentées intermédiaires solidarisées de façon permanente à l'arbre intermédiaire, la ou les roues dentées primaires et les roues dentées secondaires engrenant chacune de façon permanente avec une roue dentée correspondante parmi les roues dentées intermédiaires pour réaliser les trains de roues dentées.

En pratique, la boîte de transmission comporte des mécanismes d'accouplement pour accoupler alternativement chacune des roues dentées primaires à l'arbre primaire, et chacune des roues dentées secondaire à l'arbre secondaire. Le cas échéant, le sous-ensemble hybride peut en outre comporter un embrayage à friction, sec ou humide, destiné à être disposé entre l'arbre primaire et le moteur principal.

Diverses configurations des roues dentées primaires, des roues dentées secondaires, de l'arbre intermédiaire et du rotor de la machine électrique réversible sont envisageables.

Suivant un mode de réalisation, l'arbre primaire et l'arbre secondaire ont des axes de révolution confondus. Alternativement ces axes sont parallèles et distants.

Suivant un exemple de réalisation, l'arbre de sortie de la machine électrique réversible a un axe de révolution parallèle à un axe de révolution de l'arbre intermédiaire, une ou plusieurs des caractéristiques suivantes étant de préférence réalisées :
- l'axe de révolution de l'arbre de sortie est confondu avec l'axe de révolution de l'arbre intermédiaire ;
- l'axe de révolution de l'arbre de sortie est distant de l'axe de révolution de l'arbre intermédiaire ;
- l'axe de révolution de l'arbre de sortie est distant d'un axe de révolution de l'arbre primaire ;
- l'axe de révolution de l'arbre de sortie est distant d'un axe de révolution de l'arbre secondaire.

Suivant un exemple de réalisation, le dispositif d'accouplement comporte un train épicycloïdal disposé cinématiquement entre l'arbre de sortie et l'arbre secondaire.

Suivant différentes variantes, le dispositif d'accouplement comporte un ou plusieurs des mécanismes d'accouplement suivants :
- un mécanisme à crabot,
- un mécanisme à synchroniseur,
- un mécanisme d'embrayage, de préférence un mécanisme d'embrayage à friction, de préférence humide,
- un double embrayage à friction, de préférence humide,
- un triple embrayage à friction, de préférence humide.

On pourra notamment envisager un mécanisme à crabot sans synchronisation dans les cas où il est prévu que la machine électrique elle-même soit utilisée pour synchroniser le dispositif d'accouplement avec la roue dentée associée.

Suivant un mode de réalisation, le sous-ensemble hybride est équipé d'une unité de commande de la machine électrique réversible et du dispositif d'accouplement, et des capteurs aptes à générer un signal représentatif d'une vitesse de révolution de l'arbre intermédiaire ou d'un organe qui lui est lié cinématiquement et un signal représentatif d'une vitesse de révolution de la machine électrique réversible ou d'un organe qui lui est lié cinématiquement. L'unité de commande peut notamment être mise en œuvre pour synchroniser le dispositif d'accouplement. De préférence, l'unité de commande est apte, dans un état de désaccouplement du dispositif d'accouplement, à commander la machine électrique réversible de façon qu'une vitesse de rotation relative entre l'organe d'accouplement lié cinématiquement à la machine électrique réversible et l'organe d'accouplement lié cinématiquement à l'arbre intermédiaire réalise à une condition prédéterminée, et, lorsque la condition prédéterminée est réalisée, à commander un accouplement du dispositif d'accouplement. La condition prédéterminée pourra par exemple être une vitesse de rotation relative nulle ou une vitesse relative de glissement prédéterminée.

Suivant un autre aspect de l'invention, celle-ci comporte un groupe moteur hybride avec un moteur principal, de préférence à combustion interne, et un sous-ensemble hybride tel que décrit précédemment. Le moteur principal est équipé d'un arbre moteur principal lié à l'arbre primaire directement ou par l'intermédiaire d'un embrayage ou d'un convertisseur de couple.

De préférence, l'unité de commande du dispositif d'accouplement est opérationnelle pour piloter un ou plusieurs des modes de fonctionnement suivants :
- un mode transitoire de maintien de la traction lors d'un passage de rapport, dans lequel on positionne le dispositif d'accouplement dans la position d'accouplement secondaire, on désaccouple le moteur principal de l'arbre intermédiaire, et on commande la machine électrique réversible de manière à générer un couple moteur sur l'arbre secondaire ou à minimiser une variation de vitesse de l'arbre secondaire alors que l'on commande un changement de rapport de la boîte de transmission ;
- un mode de ralentissement régénératif pur sans l'arbre intermédiaire, dans lequel on positionne le dispositif d'accouplement dans la position d'accouplement secondaire, on désaccouple l'arbre secondaire de l'arbre intermédiaire et on génère de l'énergie électrique avec la machine électrique réversible fonctionnant en génératrice ;
- un mode d'entraînement électrique direct sans l'arbre intermédiaire, dans lequel le dispositif d'accouplement est positionné dans la position d'accouplement secondaire, l'arbre intermédiaire est désaccouplé de l'arbre secondaire, et la machine électrique réversible est motrice.

De préférence, l'unité de commande est opérationnelle pour piloter un ou plusieurs des modes de fonctionnement suivants :
- un mode de renforcement, dans lequel la boîte de transmission réalise un des rapports de transmission entre l'arbre primaire et l'arbre secondaire en passant par l'arbre intermédiaire, le moteur principal est alimenté de manière à entraîner l'arbre primaire et à exercer un couple moteur principal sur l'arbre intermédiaire, le dispositif d'accouplement est positionné dans la position d'accouplement intermédiaire, et la machine électrique réversible génère un couple moteur de renforcement sur l'arbre intermédiaire, de même signe que le couple moteur principal ;
- un mode de recharge, dans lequel la boîte de transmission est positionnée de façon à relier l'arbre primaire à l'arbre intermédiaire, on alimente le moteur principal de manière à entraîner l'arbre primaire et à exercer un couple moteur principal sur l'arbre intermédiaire, on positionne le dispositif d'accouplement dans la position d'accouplement intermédiaire, et on transforme de l'énergie cinétique en énergie électrique avec la machine électrique réversible fonctionnant en génératrice ;
- un mode transitoire de synchronisation de l'arbre intermédiaire lors d'un passage d'un des rapports de transmission de la boîte de transmission, dans lequel on positionne le dispositif d'accouplement dans la position d'accouplement intermédiaire, on désaccouple le moteur principal de l'arbre intermédiaire, puis on commande la machine électrique réversible de manière à amener l'arbre intermédiaire à une vitesse de consigne permettant l'engagement de la roue dentée secondaire avant de réaccoupler le moteur principal à l'arbre intermédiaire ;
- un mode d'entraînement électrique indirect, dans lequel on positionne le dispositif d'accouplement dans la position d'accouplement intermédiaire et on désaccouple le moteur principal de l'arbre intermédiaire alors que l'arbre intermédiaire est lié cinématiquement à l'arbre secondaire, puis on commande la machine électrique réversible en fonction d'une consigne de vitesse du véhicule ;
- un mode de freinage régénératif par l'arbre intermédiaire, dans lequel le dispositif d'accouplement est positionné dans la position d'accouplement intermédiaire, l'arbre moteur principal est découplé de l'arbre intermédiaire et la machine électrique réversible est pilotée pour fonctionner en génératrice ;
- un mode de freinage moteur hybride, dans lequel on positionne le dispositif d'accouplement dans la position d'accouplement intermédiaire, un des rapports de transmission entre l'arbre primaire et l'arbre secondaire passant par l'arbre de intermédiaire étant engagé, l'arbre primaire étant lié cinématiquement à l'arbre moteur principal, et l'on transforme de l'énergie cinétique en énergie électrique avec la machine électrique réversible fonctionnant en génératrice et on transforme de l'énergie cinétique en chaleur avec le moteur principal développant un couple résistant ;
- un mode d'entraînement d'une prise de force, dans lequel on positionne le dispositif d'accouplement dans la position d'accouplement intermédiaire et on désaccouple le moteur principal de l'arbre intermédiaire, l'arbre intermédiaire de l'arbre secondaire, puis on commande la machine électrique réversible pour entraîner une prise de force accouplée à l'arbre intermédiaire.

Suivant un autre aspect de l'invention, celle-ci a trait à un procédé d'entraînement hybride d'un véhicule comportant un groupe moteur hybride selon la revendication tel que décrit précédemment. Avec une unité de commande du dispositif d'accouplement, on pilote un ou plusieurs des modes de fonctionnement suivants :
- un mode transitoire de maintien de la traction lors d'un passage de rapport, dans lequel on positionne le dispositif d'accouplement dans la position d'accouplement secondaire, on désaccouple le moteur principal de l'arbre intermédiaire, et on commande la machine électrique réversible de manière à générer un couple moteur sur l'arbre secondaire ou à minimiser une variation de vitesse de l'arbre secondaire alors que l'on commande un changement de rapport de la boîte de transmission ;
- un mode de ralentissement régénératif pur sans l'arbre intermédiaire, dans lequel on positionne le dispositif d'accouplement dans la position d'accouplement secondaire, on désaccouple l'arbre secondaire de l'arbre intermédiaire et on génère de l'énergie électrique avec la machine électrique réversible fonctionnant en génératrice ;
- un mode d'entraînement électrique direct sans l'arbre intermédiaire, dans lequel le dispositif d'accouplement est positionné dans la position d'accouplement secondaire, l'arbre intermédiaire est désaccouplé de l'arbre secondaire, et la machine électrique réversible est motrice.

De préférence, on pilote un ou plusieurs des modes de fonctionnement suivants avec l'unité de commande :
- un mode de renforcement, dans lequel la boîte de transmission réalise un des rapports de transmission entre l'arbre primaire et l'arbre secondaire en passant par l'arbre intermédiaire, le moteur principal est alimenté de manière à entraîner l'arbre primaire et à exercer un couple moteur principal sur l'arbre intermédiaire, le dispositif d'accouplement est positionné dans la position d'accouplement intermédiaire, et la machine électrique réversible génère un couple moteur de renforcement sur l'arbre intermédiaire, de même signe que le couple moteur principal ;
- un mode de recharge, dans lequel la boîte de transmission est positionnée de façon à relier l'arbre primaire à l'arbre intermédiaire, on alimente le moteur principal de manière à entraîner l'arbre primaire et à exercer un couple moteur principal sur l'arbre intermédiaire, on positionne le dispositif d'accouplement dans la position d'accouplement intermédiaire, et on transforme de l'énergie cinétique en énergie électrique avec la machine électrique réversible fonctionnant en génératrice ;
- un mode transitoire de synchronisation de l'arbre intermédiaire lors d'un passage d'un des rapports de transmission de la boîte de transmission, dans lequel on positionne le dispositif d'accouplement dans la position d'accouplement intermédiaire, on désaccouple le moteur principal de l'arbre intermédiaire, puis on commande la machine électrique réversible de manière à amener l'arbre intermédiaire à une vitesse de consigne permettant l'engagement de la roue dentée secondaire avant de réaccoupler le moteur principal à l'arbre intermédiaire ;
- un mode d'entraînement électrique indirect, dans lequel on positionne le dispositif d'accouplement dans la position d'accouplement intermédiaire et on désaccouple le moteur principal de l'arbre intermédiaire alors que l'arbre intermédiaire est lié cinématiquement à l'arbre secondaire, puis on commande la machine électrique réversible en fonction d'une consigne de vitesse du véhicule ;
- un mode de freinage régénératif par l'arbre intermédiaire, dans lequel le dispositif d'accouplement est positionné dans la position d'accouplement intermédiaire, l'arbre moteur principal est découplé de l'arbre intermédiaire et la machine électrique réversible est pilotée pour fonctionner en génératrice ;
- un mode de freinage moteur hybride, dans lequel on positionne le dispositif d'accouplement dans la position d'accouplement intermédiaire, un des rapports de transmission entre l'arbre primaire et l'arbre secondaire passant par l'arbre de intermédiaire étant engagé, l'arbre primaire étant lié cinématiquement à l'arbre moteur principal, et l'on transforme de l'énergie cinétique en énergie électrique avec la machine électrique réversible fonctionnant en génératrice et on transforme de l'énergie cinétique en chaleur avec le moteur principal développant un couple résistant ;
- un mode d'entraînement d'une prise de force, dans lequel on positionne le dispositif d'accouplement dans la position d'accouplement intermédiaire et on désaccouple le moteur principal de l'arbre intermédiaire, l'arbre intermédiaire de l'arbre secondaire, puis on commande la machine électrique réversible pour entraîner une prise de force accouplée à l'arbre intermédiaire.

### BREVE DESCRIPTION DES FIGURES

D'autres caractéristiques et avantages de l'invention ressortiront à la lecture de la description qui suit, en référence aux figures annexées.
[Fig. 1] La figure 1 illustre un sous-ensemble hybride d'entraînement d'un véhicule suivant un premier mode de réalisation.
[Fig. 2] La figure 2 illustre un sous-ensemble hybride d'entraînement d'un véhicule suivant un deuxième mode de réalisation.
[Fig. 3] La figure 3 illustre un sous-ensemble hybride d'entraînement d'un véhicule suivant un troisième mode de réalisation.
[Fig. 4] La figure 4 illustre un sous-ensemble hybride d'entraînement d'un véhicule suivant un quatrième mode de réalisation.
[Fig. 5] La figure 5 illustre un sous-ensemble hybride d'entraînement d'un véhicule suivant un cinquième mode de réalisation.
[Fig. 6] La figure 6 illustre un sous-ensemble hybride d'entraînement d'un véhicule suivant un exemple qui ne rentre pas dans l'objet pour lequel la protection est demandée.

Pour plus de clarté, les éléments identiques ou similaires sont repérés par des signes de référence identiques sur l'ensemble des figures.

### DESCRIPTION DÉTAILLÉE DE MODES DE REALISATION

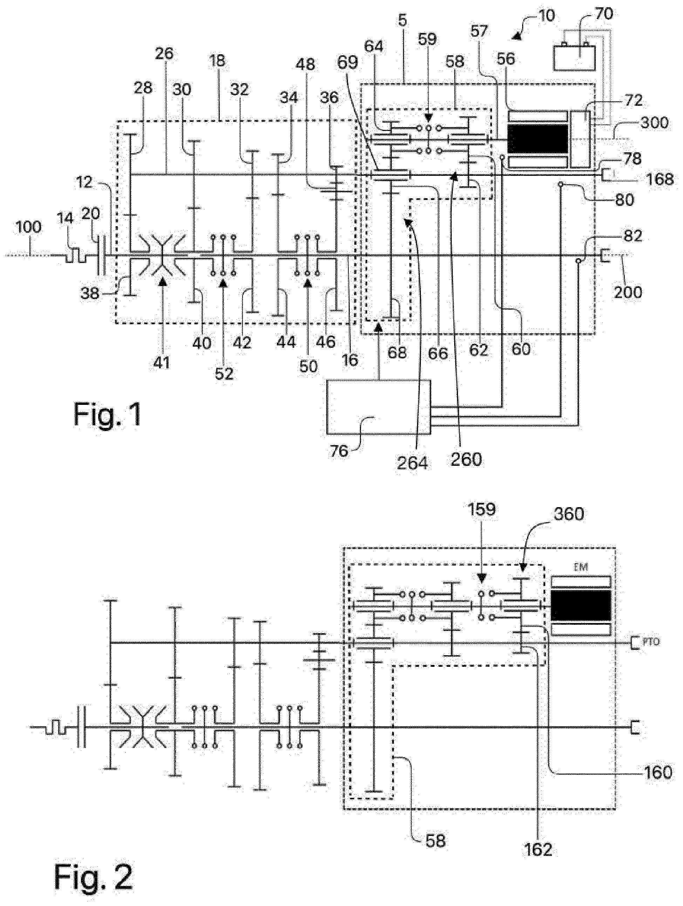

Sur la figure **1** est illustré un sous-ensemble hybride **10** d'entraînement d'un véhicule, comportant un arbre primaire **12** destiné à être entraîné par un moteur principal **14** du véhicule, par exemple un moteur thermique, un arbre secondaire **16** destiné à entraîner un ensemble d'une ou plusieurs roues motrices du véhicule (non illustré), et une boîte de transmission **18.**

La liaison du moteur principal **14** à l'arbre primaire **12** peut inclure un embrayage **20** de tout type approprié, par exemple un embrayage à glissement. La liaison de l'arbre secondaire **16** aux roues du véhicule peut inclure un ou plusieurs ponts moteurs.

La boîte de transmission **18,** logée à l'intérieur d'une cavité **22** d'un carter de transmission **24,** comporte un arbre intermédiaire **26** auquel sont solidarisées en rotation des roues dentées intermédiaires **28, 30, 32, 34, 36.** Deux roues dentées primaires **38, 40** coaxiales avec l'arbre primaire **12,** forment chacune un train d'engrenage avec une roue dentée correspondante **28,** respectivement **30,** parmi les roues dentées intermédiaires. Les engrènements des trains d'engrenages **38, 28** et**40, 30** entre roues dentées primaires **38, 40** et les roues dentées intermédiaires correspondantes **28, 30** sont permanents. Un double synchroniseur **41** à trois positions permet d'accoupler l'une ou l'autre des roues dentées primaires **38, 40** à l'arbre primaire **12,** et offre une position neutre dans laquelle aucune des roues dentées primaires **38, 40** n'est accouplée à l'arbre primaire **12.**

Des roues dentées secondaires **42, 44, 46,** coaxiales avec l'arbre secondaire **16,** forment également chacune un train d'engrenage avec une roue dentée correspondante **32, 34, 36,** respectivement, parmi les roues dentées intermédiaires, l'un des trains d'engrenage étant inverseur et comportant une roue intermédiaire **48** pour réaliser un rapport de marche arrière. Les engrènements des trains d'engrenages formés par les roues dentées secondaires **42, 44, 46** et les roues dentées intermédiaires correspondantes **32, 34, 36** sont permanents. Un accouplement à crabot à trois positions sans synchroniseurs **50,** positionné entre deux des roues secondaires **44, 46,** permet soit d'accoupler à l'arbre secondaire **16** l'une ou l'autre des deux roues secondaires associées **44, 46,** soit, dans une position neutre intermédiaire, de maintenir les roues dentées secondaires associées **44, 46** découplé de l'arbre secondaire **16.**

Dans ce mode de réalisation, l'axe de révolution **100** de l'arbre primaire **12** est aligné avec l'axe de révolution **200** avec l'arbre secondaire **16,** ce qui permet d'utiliser la roue dentée primaire d'extrémité **40** alternativement comme roue primaire, associée à l'arbre primaire **12** par le synchroniseur **41,** ou comme roue secondaire associée à l'arbre secondaire **16.** À cet effet, un accouplement à crabot **52** à trois positions sans synchroniseurs, positionné entre la roue primaire d'extrémité **40** et la roue secondaire **42,** permet d'accoupler à l'arbre secondaire **16** soit la roue primaire d'extrémité **40** soit la roue secondaire **42,** et permet également, dans une position neutre intermédiaire, de maintenir la roue primaire d'extrémité **40** et la roue secondaire **42** découplées de l'arbre secondaire **16.**

On établit ainsi une boîte de transmission **18** à six rapports de marche avant et potentiellement deux rapports de marche arrière, que l'on peut le cas échéant coupler en sortie d'arbre secondaire **16** à un train épicycloïdal (non illustré) afin d'obtenir une boîte de vitesse à douze rapports.

De façon remarquable, le sous-ensemble hybride d'entraînement **10** est équipé d'un groupe électromoteur **5** comportant une machine électrique réversible **56,** dont l'arbre de sortie **57** tourne autour d'un axe de révolution **300,** et un dispositif d'accouplement **58,** comportant dans cet exemple un mécanisme à crabot **59** à trois positions sans synchroniseur et deux trains réducteurs de roues dentées **60, 62, 64 66, 68.** Dans une position de liaison à l'arbre intermédiaire **26,** dite également position d'accouplement intermédiaire, le dispositif d'accouplement **58** réalise un accouplement en rotation de l'arbre de sortie **57** avec un réducteur de vitesse dit intermédiaire **260** comportant ici une roue dentée **60** qui engrène de façon permanente avec une roue dentée **62** solidaire de l'arbre intermédiaire **26.** Dans une position de liaison à l'arbre secondaire, dite également position d'accouplement secondaire, le dispositif d'accouplement **58** réalise un accouplement de l'arbre de sortie **57** avec un réducteur de vitesse dit secondaire **264,** comportant une roue dentée **64** qui engrène de façon permanente avec une roue dentée d'inversion **66** qui engrène elle-même de façon permanente avec une roue dentée **68** solidaire de l'arbre secondaire **16.** De façon remarquable, on peut prévoir que la roue dentée d'inversion **66** soit guidée en rotation par un palier de guidage **69** coaxial avec l'arbre intermédiaire **26.** L'arbre intermédiaire **26** peut alors supporter le palier de guidage **69.** Enfin, le dispositif d'accouplement **58,** dans une position neutre, maintient l'arbre de sortie **57** découplé des roues dentées **60, 64.** Au sein du dispositif d'accouplement **58,** le passage de la position d'accouplement intermédiaire à la position d'accouplement secondaire se fait par l'intermédiaire du mécanisme d'accouplement **59** piloté par une unité de commande **76.**

Le cas échéant, l'arbre intermédiaire **26** est équipé d'une prise de force **168,** destinée à permettre un accouplement d'un ou plusieurs accessoires du véhicule, par exemple un treuil, une pompe ou un outil. La prise de force **168** peut être par exemple un arbre de transmission comprenant une interface externe de raccordement, par exemple une cannelure.

L'arbre moteur **57** illustré sur la figure **1** est solidaire du rotor de la machine électrique réversible **56** et constitue un arbre moteur. Alternativement, la machine électrique réversible peut intégrer un réducteur entre l'arbre de moteur et l'arbre de sortie **57.**

La machine électrique réversible **56** est alimentée par une batterie **70** par l'intermédiaire d'un convertisseur de courant **72** bidirectionnel, qui permet d'alimenter la machine électrique réversible **56** en moteur, et inversement, de faire tourner la machine électrique réversible **56** en génératrice pour alimenter la batterie **70.**

La machine électrique réversible **56** est de préférence une machine à haute tension, alimentée par exemple à une tension nominale entre 300 Volts et 800 Volts, capable de délivrer un couple et une puissance importante, comme il sera discuté plus loin.

L'unité de commande **76** permet de commander la machine électrique réversible **56** et son dispositif d'accouplement **58.** À cette unité de commande sont connectés des capteurs **78, 80, 82** pour mesurer la vitesse de révolution de l'arbre de sortie **57,** de l'arbre intermédiaire **26** et de l'arbre secondaire **16** ou des vitesses de révolution d'éléments entraînés de façon permanente par ces arbres. Cette unité de commande **76** peut être intégrée à une commande robotisée de la boîte de transmission **18** qui commande l'ouverture et la fermeture des synchroniseurs **41,** des mécanismes à crabot **50, 52,** et le cas échéant de l'embrayage principal **20,** pour répondre à une consigne de couple ou de vitesse.

La machine électrique **56** permet d'envisager plusieurs modes de fonctionnement, comme il sera discuté plus loin.

Sur la figure 2 est illustré un sous-ensemble hybride **10** selon un deuxième exemple de réalisation de l'invention, qui diffère de l'exemple de réalisation de la figure 1 par le fait que le dispositif d'accouplement **58** comporte, en plus du mécanisme d'accouplement à crabot à trois positions **59,** un mécanisme d'accouplement à crabot à deux positions **159,** qui réalise un accouplement en rotation de l'arbre de sortie **57** avec un deuxième réducteur de vitesse intermédiaire **360** comportant une roue dentée **160** qui engrène de façon permanente avec une roue dentée **162** solidaire de l'arbre intermédiaire **26.** Le rapport de transmission réalisé par l'engrenage des roues dentées **160, 162** est différent du rapport de transmission de l'engrenage des roues dentées **60, 62.** Le mécanisme d'accouplement **159,** dans une position neutre, maintient l'arbre de sortie **57** découplé de la roue dentée **160.**

L'homme du métier comprendra, sans qu'il soit nécessaire de l'illustrer dans le détail, qu'il pourrait le cas échéant multiplier les rapports de transmission entre l'arbre de sortie **57** et l'arbre intermédiaire en ajoutant des réducteurs de vitesses entre les mécanismes d'accouplement **59, 159** et l'arbre intermédiaire **26.** De façon analogue, il serait possible de multiplier les rapports de transmission entre l'arbre de sortie **57** et l'arbre secondaire **16** en ajoutant des mécanismes d'accouplement et des réducteurs de vitesses entre l'arbre de sortie **57** et l'arbre secondaire **16.**

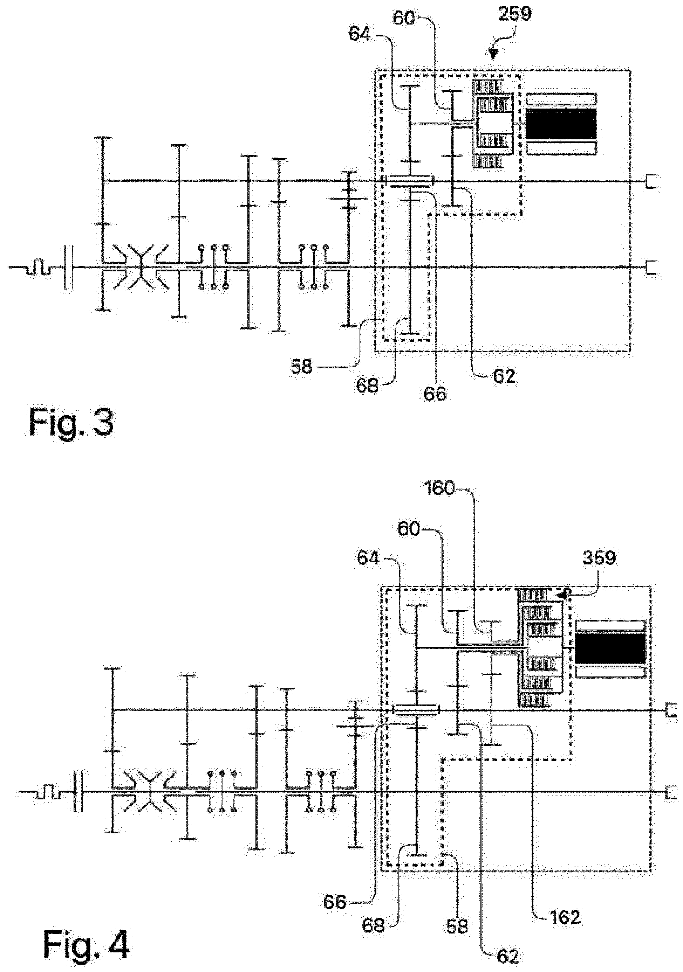

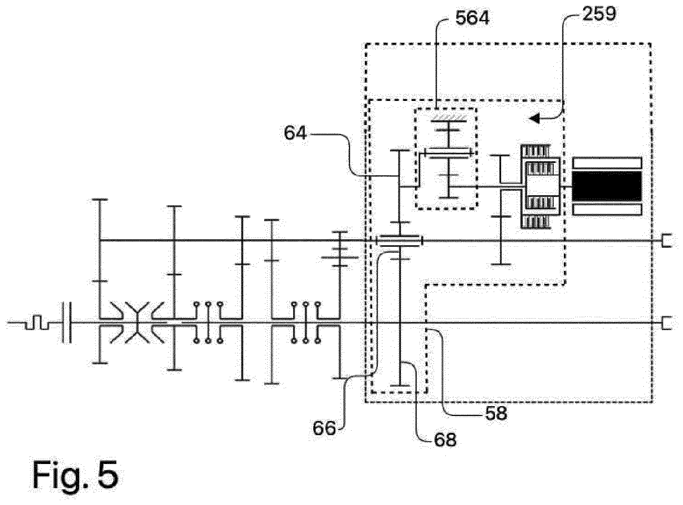

Les mécanismes d'accouplement **59, 159** du dispositif d'accouplement **58** peuvent être de tout type, notamment à crabot avec ou sans synchronisation ou à friction. Sur la figure 3 est ainsi illustré un troisième exemple de réalisation de l'invention, qui diffère de l'exemple de réalisation de la figure 1 par le fait que le dispositif d'accouplement **58** comporte un mécanisme d'accouplement du type à double embrayage à friction humide **259.** Sur la figure 4, le dispositif d'accouplement **58** comporte un mécanisme d'accouplement du type à triple embrayage à friction humide **359,** réalisant les mêmes rapports de transmission que l'exemple de réalisation de la figure 2. Sur la figure 5, on a illustré un cinquième exemple de réalisation de l'invention, qui diffère de l'exemple de réalisation de la figure 3 par l'ajout d'un réducteur, ici un train épicycloïdal **564,** entre la roue dentée **64** et l'arbre secondaire **16.** Suivant le type de train épicycloïdal choisi, l'engrenage d'inversion des roues dentées **66, 68** pourra rester nécessaire, ou être intégré au train épicycloïdal.

Dans les exemples de réalisation de l'invention selon les figures 2 et 4, le dispositif d'accouplement comprend une pluralité de positions d'accouplement et de désaccouplement, notamment trois positions d'accouplement distinctes, permettant une transmission de puissance en provenance de la machine électrique réversible vers l'arbre intermédiaire ou l'arbre secondaire selon des rapports de transmission différents. Le dispositif d'accouplement comprend notamment une première position d'accouplement intermédiaire, une deuxième position d'accouplement intermédiaire autrement appelé position d'accouplement intermédiaire supplémentaire et une position d'accouplement secondaire. Dans la deuxième position d'accouplement intermédiaire, le dispositif d'accouplement 58 lie cinématiquement la machine électrique réversible 56 à l'arbre intermédiaire 26 avec un deuxième rapport de transmission intermédiaire distinct du premier rapport de transmission intermédiaire.

Les divers exemples de réalisation décrits ont en commun un dispositif d'accouplement **58** apte prendre au moins une position d'accouplement dite intermédiaire dans laquelle la machine électrique réversible **56** est liée cinématiquement à l'arbre intermédiaire, et au moins une position d'accouplement secondaire dans laquelle la machine électrique réversible **56** est liée cinématiquement à l'arbre secondaire **16** sans passer par l'arbre intermédiaire **26.** On peut exploiter ces divers accouplements pour réaliser une grande variété de modes de fonctionnement, comme il va être discuté à présent.

Tout d'abord, plusieurs modes de fonctionnement peuvent être mis en œuvre alors que le dispositif d'accouplement **58** relie l'arbre de sortie **57** à l'arbre intermédiaire **26.**

Dans un mode transitoire de synchronisation de l'arbre intermédiaire lors d'un passage de rapport, on positionne le dispositif d'accouplement **58** dans la position d'accouplement intermédiaire, on désaccouple le moteur principal **14** de l'arbre intermédiaire **26** soit au niveau de l'embrayage **20,** soit au niveau du mécanisme à crabot **41**, puis on commande la machine électrique réversible **56** de manière à amener l'arbre intermédiaire **26** à une vitesse de consigne permettant l'engagement de la roue dentée secondaire avant de réaccoupler le moteur principal **14** à l'arbre intermédiaire **26.** Durant ces phases transitoires, la machine électrique réversible **56** permet ainsi d'adapter la vitesse de révolution de l'arbre intermédiaire aux besoins de synchronisation lors des commutations des mécanismes à crabot **50, 52** ou des synchroniseurs **41.** Dans ces phases, la machine électrique réversible peut être utilisée alternativement comme moteur électrique pour augmenter la vitesse de révolution de l'arbre intermédiaire **26** ou comme génératrice pour diminuer cette vitesse. Cette adaptation de la vitesse de l'arbre intermédiaire **26** permet de réduire les temps de crabotage ou de synchronisation, sans avoir recours à un frein de boîte.

Dans un mode de recharge, on accouple une des roues dentées primaires **38, 40** à l'arbre primaire **12,** on alimente le moteur principal **14** de manière à entraîner l'arbre primaire **12** et à exercer un couple moteur principal sur l'arbre intermédiaire **26,** on positionne le dispositif d'accouplement **58** dans la position d'accouplement intermédiaire, et on transforme de l'énergie cinétique en énergie électrique avec la machine électrique réversible fonctionnant en génératrice. La recharge peut avoir lieu alors que l'arbre intermédiaire **26** entraîne l'arbre secondaire **16** ou sans liaison à l'arbre secondaire **16.**

Dans un mode de renforcement, l'une des roues dentées secondaires **42, 44, 46** est accouplée à l'arbre secondaire **16,** l'une des roues dentées primaire **38, 40** est accouplée à l'arbre primaire, le moteur principal **14** est alimenté de manière à entraîner l'arbre primaire **12** et à exercer un couple moteur principal sur l'arbre intermédiaire **26,** et le dispositif d'accouplement **58** est positionné la position d'accouplement intermédiaire ou l'une des positions d'accouplement intermédiaire s'il en existent plusieurs, et la machine électrique réversible génère un couple moteur de renforcement sur l'arbre intermédiaire, de même signe que le couple moteur principal. L'apport de puissance supplémentaire pour la traction du véhicule est réalisé avec un rapport de transmission (pour les exemples de réalisation des figures 1, 3 et 5), deux rapports de transmission (pour les exemples de réalisation des figures 2 et 4), voire davantage.

Dans un mode d'entraînement électrique pur passant par l'arbre intermédiaire **26,** on positionne le dispositif d'accouplement **58** dans la position d'accouplement intermédiaire et on désaccouple le moteur principal **14** de l'arbre intermédiaire **26** alors que l'une des roues dentées secondaires **42, 44, 46** est accouplée à l'arbre secondaire **16,** puis on commande la machine électrique réversible en fonction d'une consigne de vitesse du véhicule. À titre indicatif, pour mettre en œuvre un tel mode d'entraînement électrique du véhicule, il est avantageux que la machine électrique réversible puisse développer de façon continue un couple moteur supérieur à 300 Nm, et de préférence supérieure à 350Nm, dans une plage de vitesse de plus de 1000 tr/min, et de préférence de plus de 2000 tr/min comprise ayant une borne inférieure qui est inférieure à 6000 tr/min, et de préférence inférieure à 5000 tr/min, et une borne supérieure qui est supérieure à 6000 tr/min, de préférence supérieure à 7000 tr/min, et de préférence supérieure à 9000 tr/min. Avec une telle plage de fonctionnement, combinée avec plusieurs rapports de transmission compris entre 4 et 8 réalisés par les engrènements des roues dentées **32** et **42, 34** et **44, 60, 62** et le cas échéant **160, 162,** on peut envisager un fonctionnement électrique du véhicule en mode urbain.

Dans un mode de freinage régénératif passant par l'arbre intermédiaire, le dispositif d'accouplement **58** est positionné dans la position d'accouplement intermédiaire, le moteur principal **14** est découplé de l'arbre intermédiaire **26,** au niveau de l'embrayage **20** ou des synchronisateurs **41,** l'un des crabots **50, 52** est engagé pour relier l'arbre intermédiaire **26** à l'arbre secondaire **16** et la machine électrique réversible **56** est pilotée pour fonctionner en génératrice.

Dans un mode de freinage moteur hybride, on positionne le dispositif d'accouplement **58** dans la position d'accouplement intermédiaire, on maintient une liaison cinématique entre le moteur principal **14,** l'arbre intermédiaire **26** et l'arbre secondaire **16,** on transforme une partie de l'énergie cinétique transmise par l'arbre secondaire **16** en énergie électrique avec la machine électrique réversible **56** fonctionnant en génératrice et on transforme une partie de l'énergie cinétique transmise par l'arbre secondaire **16** en chaleur avec le moteur principal **14** développant un couple résistant. Ce mode de fonctionnement permet d'atteindre un couple de freinage plus important qu'avec le moteur principal **14** seul.

On peut également utiliser la machine électrique réversible **56** en moteur pour entraîner la prise de force **168** alors que la boîte de transmission **18** est en position neutre pour interrompre la liaison entre l'arbre intermédiaire **26** et l'arbre primaire **12** d'une part, et entre l'arbre intermédiaire **26** et l'arbre secondaire **16** d'autre part.

De façon particulièrement avantageuse, d'autres modes de fonctionnement peuvent être envisagés alors que le dispositif d'accouplement **58** relie l'arbre de sortie **57** à l'arbre intermédiaire **26.**

On peut ainsi mettre en œuvre un mode transitoire de maintien de la traction lors d'un passage de rapport, dans lequel on positionne le dispositif d'accouplement **58** dans la position d'accouplement secondaire, on désaccouple le moteur principal **14** de l'arbre intermédiaire **26,** et on commande la machine électrique réversible **56** de manière à générer un couple moteur sur l'arbre secondaire **16** ou à minimiser une variation de vitesse de l'arbre secondaire alors que l'on commande un changement de rapport de la boîte de transmission **18** entre le moteur principal **14** et l'arbre intermédiaire **26** et/ou entre l'arbre intermédiaire **26** et l'arbre secondaire **16.**

On peut également envisager un mode de freinage régénératif pur sans l'arbre intermédiaire **26,** dans lequel on positionne le dispositif d'accouplement dans la position d'accouplement secondaire, on désaccouple l'arbre secondaire **16** de l'arbre intermédiaire **26** en agissant sur les mécanismes à crabot **50, 52** et on génère de l'énergie électrique avec la machine électrique réversible **56** fonctionnant en génératrice. Pour réaliser de façon optimale ce mode de freinage régénératif sans le moteur principal, il est avantageux que la machine électrique réversible pusse développer un couple résistant supérieur à 400 Nm et de préférence supérieur à 450Nm dans une plage de vitesse de plus de 3000 tr/min, et de préférence de plus de 4000 tr/min ayant une borne inférieure qui est inférieure à 6500 tr/min, et de préférence inférieure à 6000 tr/min et une borne supérieure qui est supérieure à 9000 tr/min, et de préférence supérieure à 10000 tr/min, ceci pendant 30 secondes au moins.

Le mode transitoire de maintien de la traction lors d'un passage de rapport et le mode de freinage régénératif pur sans l'arbre intermédiaire **26** sont des modes de fonctionnement transitoire, n'ayant pas vocation à durer plus d'une trentaine de seconde. À titre indicatif, avec un rapport de transmission de l'ordre de 8 entre l'arbre de sortie **57** et l'arbre secondaire **16,** on a avantage à dimensionner la machine électrique réversible pour développer un couple résistant supérieur à 400 Nm et de préférence supérieur à 450Nm dans une plage de vitesse de plus de 3000 tr/min, et de préférence de plus de 4000 tr/min ayant une borne inférieure qui est inférieure à 6500 tr/min, et de préférence inférieure à 6000 tr/min et une borne supérieure qui est supérieure à 9000 tr/min, et de préférence supérieure à 10000 tr/min, pendant 30 secondes.

On peut enfin mettre en œuvre un mode d'entraînement électrique direct sans l'arbre intermédiaire **26,** dans lequel le dispositif d'accouplement **58** est positionné dans la position d'accouplement secondaire et l'arbre intermédiaire **26** est désaccouplé de l'arbre secondaire **16** au niveau des mécanismes à crabot **50, 52,** la machine électrique réversible agissant de façon motrice ou régénérative suivant les besoins d'accélération ou de freinage. Ce mode de fonctionnement est moins flexible que le mode d'entraînement électrique avec l'arbre intermédiaire puisqu'on ne dispose de la pluralité de rapports de transmission de la boîte de transmission **18.** Mais il peut être utilisé en complément de cette dernière, en offrant un rapport de transmission directe entre arbre de sortie **57** et arbre secondaire **16** plus élevé que les rapports de transmission utilisant la boîte de transmission **18.** À titre indicatif, on peut par exemple développer deux rapports ayant une valeur de l'ordre de 4 et de 6 respectivement, avec les crabots **50, 52** de la boîte de transmission **18** combinés avec le train de roues dentées **60, 62** du dispositif d'accouplement **58,** et un rapport de transmission supplémentaire ayant une valeur de l'ordre de 8 par le train de roues dentées **64, 66, 68** du dispositif d'accouplement **58.**

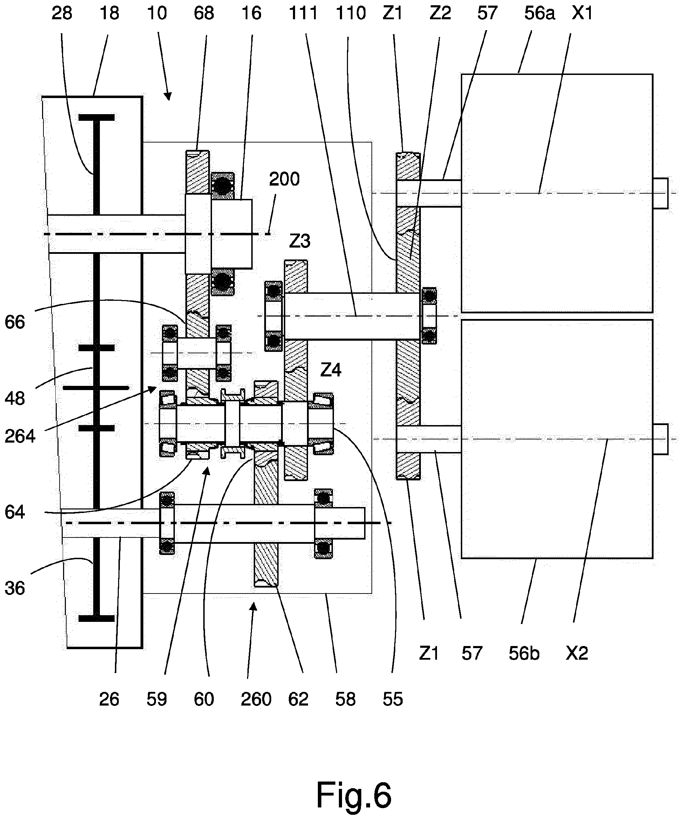

Sur la figure 6 est illustré un exemple qui ne rentre pas dans l'objet pour lequel la protection est demandée, qui diffère du premier mode de réalisation par l'utilisation de deux machines électriques réversibles **56a** et **56b,** chaque machine électrique comprenant un stator et un rotor présentant un arbre de sortie mobile en rotation autour d'un axe.

Les machines électriques réversibles **56a, 56b** sont du même type et sont par exemple des machines synchrones à aimants permanents. Chaque machine électrique fournit une même puissance nominale mécanique.

Comme on peut le voir sur la figure 6, la première machine électrique **56a** présente dans l'exemple décrit un rotor avec un premier arbre de sortie **57** tournant autour d'un premier axe de rotation **X1,** la deuxième machine électrique **56b** présente un rotor avec un deuxième arbre de sortie **57** tournant autour d'un deuxième axe de rotation **X2.** Dans l'exemple décrit, les axes de rotation des machines électriques réversibles sont parallèles mais non confondus, les deux machines électriques **56a, 56b** n'ayant pas leurs axes de rotation alignés.

Les arbres de sortie **57** des deux machines électriques engrènent simultanément sur une roue dentée commune **110** disposée entre les axes **X1, X2.** La roue dentée commune **110** est liée cinématiquement aux deux arbres de sortie et reçoit le couple moteur fourni par les deux machines électriques, celles-ci étant réparties autour de la roue dentée commune **110** de sorte à former un premier réducteur de vitesse **Z1, Z2.** La roue dentée commune **110** est liée cinématiquement avec un arbre de transmission **55** spécifique au dispositif d'accouplement **58** de cet exemple à l'aide d'un deuxième réducteur de vitesse **Z3, Z4.**

De manière similaire au premier mode de réalisation, le dispositif d'accouplement **58** comporte un mécanisme à crabot **59** à trois positions sans synchroniseur et deux trains réducteurs de roues dentées **60, 62, 64 66, 68.** Dans une position de liaison à l'arbre intermédiaire **26,** dite également position d'accouplement intermédiaire, le dispositif d'accouplement **58** réalise un accouplement en rotation de l'arbre de transmission **55** avec un réducteur de vitesse dit intermédiaire **260** comportant ici une roue dentée **60** qui engrène de façon permanente avec une roue dentée **62** solidaire de l'arbre intermédiaire **26.** Dans une position de liaison à l'arbre secondaire, dite également position d'accouplement secondaire, le dispositif d'accouplement **58** réalise un accouplement de l'arbre de transmission **55** avec un réducteur de vitesse dit secondaire **264,** comportant une roue dentée **64** qui engrène de façon permanente avec une roue dentée d'inversion **66** qui engrène elle-même de façon permanente avec une roue dentée **68** solidaire de l'arbre secondaire **16.**

Suivant une variante non illustrée, l'organe de prise de force **168** est positionné sur l'arbre de sortie **57** de la machine électrique réversible **56.**

## Revendications

1. Sous-ensemble hybride (10) d'entraînement d'un véhicule, comportant :
- au moins un arbre primaire (12) ;
- au moins un arbre secondaire (16) ;
- une boîte de transmission (18) comportant au moins un arbre intermédiaire (26) distinct de l'arbre primaire (12) et de l'arbre secondaire (16) et des trains de roues dentées (38, 28, 40, 30, 32, 42, 36, 48, 44, 46) pour réaliser plusieurs rapports de transmission entre l'arbre primaire (12) et l'arbre secondaire (16) en passant par l'arbre intermédiaire (26) ;
- un groupe électromoteur comportant au moins une machine électrique réversible (56), et un dispositif d'accouplement (58) qui, dans au moins une position d'accouplement intermédiaire, lie cinématiquement un arbre de sortie (57) de la machine électrique réversible (56) à l'arbre intermédiaire (26),
dans lequel le dispositif d'accouplement (58), dans une position d'accouplement secondaire, lie cinématiquement l'arbre de sortie (57) de la machine électrique réversible (56) à l'arbre secondaire (16) sans passer par l'arbre intermédiaire (26) et,
dans lequel le dispositif d'accouplement (58) comprend au moins un mécanisme d'accouplement (59, 159, 259, 359) lié cinématiquement de façon permanente à l'arbre de sortie (57) de la machine électrique réversible (56), un réducteur de vitesse intermédiaire (260, 360) lié cinématiquement de façon permanente à l'arbre intermédiaire (26) et un réducteur de vitesse secondaire (264, 564) liée cinématiquement de façon permanente à l'arbre secondaire (16),
**caractérisé en ce que** le réducteur de vitesse secondaire (264, 564) comprend une roue dentée d'inversion (66) guidée en rotation par un palier de guidage (69) coaxial avec l'arbre intermédiaire (26).

2. Sous-ensemble hybride (10) selon la revendication 1, **caractérisé en ce que** le dispositif d'accouplement (58), dans au moins une position de désaccouplement, désaccouple cinématiquement de manière simultanée l'arbre de sortie (57) de la machine électrique réversible (56) à l'arbre intermédiaire (26) et à l'arbre secondaire (16).

3. Sous-ensemble hybride (10) selon l'une quelconque des revendications précédentes, présentant une ou plusieurs des caractéristiques suivantes :
- la machine électrique réversible (56) est apte à développer de façon continue un couple moteur supérieur à 300 Nm dans une plage de vitesse de plus de 1000 tr/min comprise ayant une borne inférieure qui est inférieure à 6000 tr/min et une borne supérieure qui est supérieure à 6000 tr/min ;
- la machine électrique réversible (56) est apte à développer un couple résistant supérieur à 400 Nm dans une plage de vitesse de plus de 3000 tr/min ayant une borne inférieure qui est inférieure à 6500 tr/min et une borne supérieure qui est supérieure à 9000 tr/min, pendant 30 secondes ;
- la machine électrique réversible (56) est apte à développer un couple moteur supérieur à 50 Nm dans une plage de vitesse de plus de 5500 tr/min ayant une borne inférieure qui est inférieure à 5000 tr/min et une borne supérieure qui est supérieure à 10000 tr/min pendant 5 secondes en régime de transitoire de changement de rapport.

4. Sous-ensemble hybride (10) selon l'une quelconque des revendications précédentes, **caractérisé en ce que** le dispositif d'accouplement (58) dans la position d'accouplement intermédiaire lie cinématiquement l'arbre de sortie (57) de la machine électrique réversible (56) à l'arbre intermédiaire (26) avec un rapport de transmission intermédiaire, le dispositif d'accouplement (58) dans la position d'accouplement secondaire lie cinématiquement la machine électrique réversible (56) à l'arbre secondaire (16) avec un rapport de transmission secondaire, et **en ce que** au moins un des critères suivants est rempli :
- le rapport de transmission secondaire est supérieur à 6, et de préférence supérieur ou égal à 8 ;
- le rapport de transmission intermédiaire est supérieur à 4, et de préférence supérieur ou égal à 6 entre l'arbre intermédiaire (26) et l'arbre de sortie (57) de de la machine électrique réversible (56) ;
- le rapport de transmission secondaire est strictement supérieur au rapport de transmission intermédiaire, de préférence avec un facteur supérieur ou égal à 1,5 entre le rapport de transmission secondaire et le rapport de transmission intermédiaire.

5. Sous-ensemble hybride (10) selon la revendication 4, **caractérisé en ce que** le dispositif d'accouplement (58), dans une position d'accouplement intermédiaire supplémentaire, lie cinématiquement la machine électrique réversible (56) à l'arbre intermédiaire (26) avec un rapport de transmission intermédiaire supplémentaire distinct du rapport de transmission intermédiaire.

6. Sous-ensemble hybride (10) selon l'une quelconque des revendications précédentes, **caractérisé en ce qu'**il comporte en outre un organe de prise de force (168), apte à être entraîné au moins par la machine électrique réversible (56), de préférence de l'une des manières suivantes :
- l'organe de prise de force (168) est lié cinématiquement de façon permanente à l'arbre intermédiaire (26) ;
- l'organe de prise de force (168) est lié cinématiquement à l'arbre de sortie (57) de la machine électrique réversible (56) par l'intermédiaire du dispositif d'accouplement (58) en position d'accouplement intermédiaire.

7. Sous-ensemble hybride selon l'une quelconque des revendications précédentes, **caractérisé en ce que** le dispositif d'accouplement (58) comporte un train épicycloïdal (564) disposé cinématiquement entre l'arbre de sortie (57) et l'arbre secondaire (16).

8. Sous-ensemble hybride selon l'une quelconque des revendications précédentes, **caractérisé en ce que** le dispositif d'accouplement (58) comporte un ou plusieurs des mécanismes d'accouplement suivants :
- un mécanisme à crabot (59, 159),
- un mécanisme à synchroniseur,
- un mécanisme d'embrayage (259, 359), de préférence un mécanisme d'embrayage à friction, de préférence humide,
- un double embrayage à friction (259), de préférence humide,
- un triple embrayage à friction (359), de préférence humide.

9. Sous-ensemble hybride (10) selon l'une quelconque des revendications précédentes, **caractérisé en ce que** le groupe électromoteur comporte deux machines électriques réversibles (56a, 56b) comprenant chacune un rotor avec un arbre de sortie (57) tournant autour d'un axe de rotation (X1, X2), les deux arbres de sortie (57) engrenant simultanément sur une roue dentée commune (110) disposée parallèlement aux deux axes de rotation (X1, X2), ladite roue dentée commune (110) étant liée cinématiquement en rotation, directement ou indirectement via un engrenage, au dispositif d'accouplement (58).

10. Sous-ensemble hybride (10) selon l'une des revendications 1 à 8, **caractérisé en ce qu'**il comporte une unité de commande (76) de la machine électrique réversible (56) et du dispositif d'accouplement (58), et des capteurs (78, 80, 82) aptes à générer un signal représentatif d'une vitesse de révolution de l'arbre intermédiaire (26) ou d'un organe qui lui est lié cinématiquement, un signal représentatif d'une vitesse de révolution de l'arbre secondaire (16) ou d'un organe qui lui est lié cinématiquement, et un signal représentatif d'une vitesse de révolution de la machine électrique réversible (56) ou d'un organe qui y est lié cinématiquement.

11. Groupe moteur hybride comportant un moteur principal (14), de préférence à combustion interne, avec un arbre moteur principal, **caractérisé en ce qu'**il comporte en outre un sous-ensemble hybride (10) selon l'une quelconque des revendications précédentes, l'arbre moteur principal étant lié à l'arbre primaire (12) directement ou par l'intermédiaire d'un embrayage (20) ou d'un convertisseur de couple.

12. Procédé d'entraînement hybride d'un véhicule comportant un groupe moteur hybride selon la revendication 11, **caractérisé en ce qu'**avec une unité de commande (76) du dispositif d'accouplement (58), on pilote un ou plusieurs des modes de fonctionnement suivants :
- un mode transitoire de maintien de la traction lors d'un passage de rapport, dans lequel on positionne le dispositif d'accouplement (58) dans la position d'accouplement secondaire, on désaccouple le moteur principal (14) de l'arbre intermédiaire (26), et on commande la machine électrique réversible (56) de manière à générer un couple moteur sur l'arbre secondaire (16) ou à minimiser une variation de vitesse de l'arbre secondaire (16) alors que l'on commande un changement de rapport de la boîte de transmission (18) ;
- un mode de ralentissement régénératif pur sans l'arbre intermédiaire (26), dans lequel on positionne le dispositif d'accouplement (58) dans la position d'accouplement secondaire, on désaccouple l'arbre secondaire (16) de l'arbre intermédiaire (26) et on génère de l'énergie électrique avec la machine électrique réversible (56) fonctionnant en génératrice ;
- un mode d'entraînement électrique direct sans l'arbre intermédiaire (26), dans lequel le dispositif d'accouplement (58) est positionné dans la position d'accouplement secondaire, l'arbre intermédiaire (26) est désaccouplé de l'arbre secondaire (16), et la machine électrique réversible (56) est motrice.

13. Procédé d'entraînement hybride selon la revendication précédente, **caractérisé en ce qu'**avec l'unité de commande (76) on pilote un ou plusieurs des modes de fonctionnement suivant :
- un mode de renforcement, dans lequel la boîte de transmission (18) réalise un des rapports de transmission entre l'arbre primaire (12) et l'arbre secondaire (16) en passant par l'arbre intermédiaire (26), le moteur principal (14) est alimenté de manière à entraîner l'arbre primaire (12) et à exercer un couple moteur principal sur l'arbre intermédiaire (26), le dispositif d'accouplement (58) est positionné dans la position d'accouplement intermédiaire, et la machine électrique réversible (56) génère un couple moteur de renforcement sur l'arbre intermédiaire (26), de même signe que le couple moteur principal ;
- un mode de recharge, dans lequel la boîte de transmission (18) est positionnée de façon à relier l'arbre primaire (12) à l'arbre intermédiaire (26), on alimente le moteur principal (14) de manière à entraîner l'arbre primaire (12) et à exercer un couple moteur principal sur l'arbre intermédiaire (26), on positionne le dispositif d'accouplement (58) dans la position d'accouplement intermédiaire, et on transforme de l'énergie cinétique en énergie électrique avec la machine électrique réversible (56) fonctionnant en génératrice ;
- un mode transitoire de synchronisation de l'arbre intermédiaire (26) lors d'un passage d'un des rapports de transmission de la boîte de transmission (18), dans lequel on positionne le dispositif d'accouplement (58) dans la position d'accouplement intermédiaire, on désaccouple le moteur principal (14) de l'arbre intermédiaire (26), puis on commande la machine électrique réversible (56) de manière amener l'arbre intermédiaire (26) à une vitesse de consigne permettant l'engagement de la roue dentée secondaire avant de réaccoupler le moteur principal (14) à l'arbre intermédiaire (26) ;
- un mode d'entraînement électrique indirect, dans lequel on positionne le dispositif d'accouplement (58) dans la position d'accouplement intermédiaire et on désaccouple le moteur principal (14) de l'arbre intermédiaire (26) alors que l'arbre intermédiaire (26) est lié cinématiquement à l'arbre secondaire (16), puis on commande la machine électrique réversible en fonction d'une consigne de vitesse du véhicule ;
- un mode de freinage régénératif par l'arbre intermédiaire (26), dans lequel le dispositif d'accouplement (58) est positionné dans la position d'accouplement intermédiaire, l'arbre moteur principal (12) est découplé de l'arbre intermédiaire (26) et la machine électrique réversible (56) est pilotée pour fonctionner en génératrice ;
- un mode de freinage moteur hybride, dans lequel on positionne le dispositif d'accouplement (58) dans la position d'accouplement intermédiaire, un des rapports de transmission entre l'arbre primaire et l'arbre secondaire (16) passant par l'arbre de intermédiaire (26) étant engagé, l'arbre primaire (12) étant lié cinématiquement à l'arbre moteur principal, et l'on transforme de l'énergie cinétique en énergie électrique avec la machine électrique réversible (56) fonctionnant en génératrice et on transforme de l'énergie cinétique en chaleur avec le moteur principal développant un couple résistant ;
- un mode d'entraînement d'une prise de force (168), dans lequel on positionne le dispositif d'accouplement (58) dans la position d'accouplement intermédiaire et on désaccouple le moteur principal de l'arbre intermédiaire, l'arbre intermédiaire (26) de l'arbre secondaire (16), puis on commande la machine électrique réversible (56) pour entraîner une prise de force (168) accouplée à l'arbre intermédiaire (26).

## Patentansprüche

1. Hybrid-Unterbaugruppe (10) für den Antrieb eines Fahrzeugs, die Folgendes aufweist:
- mindestens eine Primärwelle (12);
- mindestens eine Sekundärwelle (16);
- ein Getriebe (18) mit mindestens einer von der Primärwelle (12) und der Sekundärwelle (16) verschiedenen Zwischenwelle (26) und Zahnradsätzen (38, 28, 40, 30, 32, 42, 36, 48, 44, 46), um mehrere Übersetzungsverhältnisse zwischen der Primärwelle (12) und der Sekundärwelle (16) über die Zwischenwelle (26) herzustellen;
- eine Elektromotorgruppe mit mindestens einer umkehrbaren elektrischen Maschine (56) und einer Kupplungsvorrichtung (58), die in mindestens einer Zwischenkupplungsposition eine Ausgangswelle (57) der umkehrbaren elektrischen Maschine (56) kinematisch mit der Zwischenwelle (26) verbindet,
bei der die Kupplungsvorrichtung (58) in einer sekundären Kupplungsposition die Ausgangswelle (57) der umkehrbaren elektrischen Maschine (56) kinematisch mit der sekundären Welle (16) verbindet, ohne die Zwischenwelle (26) zu durchlaufen, und
bei der die Kupplungsvorrichtung (58) mindestens einen Kupplungsmechanismus (59, 159, 259, 359), der kinematisch permanent mit der Ausgangswelle (57) der umkehrbaren elektrischen Maschine (56) verbunden ist, ein Zwischen-Untersetzungsgetriebe (260, 360), das kinematisch permanent mit der Zwischenwelle (26) verbunden ist, und ein sekundäres Untersetzungsgetriebe (264, 564), das kinematisch permanent mit der Sekundärwelle (16) verbunden ist, aufweist,
**dadurch gekennzeichnet, dass** das sekundäre Untersetzungsgetriebe (264, 564) ein Umkehrzahnrad (66) aufweist, das durch ein Führungslager (69) koaxial zur Zwischenwelle (26) drehbar geführt wird.

2. Hybrid-Unterbaugruppe (10) nach Anspruch 1, **dadurch gekennzeichnet, dass** die Kupplungsvorrichtung (58) in mindestens einer Entkupplungsposition die Ausgangswelle (57) der umkehrbaren elektrischen Maschine (56) gleichzeitig kinematisch von der Zwischenwelle (26) und der Sekundärwelle (16) entkuppelt.

3. Hybrid-Unterbaugruppe (10) nach einem der vorhergehenden Ansprüche, die eines oder mehrere der folgenden Merkmale aufweist:
- die umkehrbare elektrische Maschine (56) ist geeignet, kontinuierlich ein Drehmoment von mehr als 300 Nm in einem Drehzahlbereich von mehr als 1000 U/min mit einem unteren Grenzwert unter 6000 U/min und einem oberen Grenzwert über 6000 U/min zu entwickeln;
- die umkehrbare elektrische Maschine (56) ist geeignet, 30 Sekunden lang ein Widerstandsmoment von mehr als 400 Nm in einem Drehzahlbereich von mehr als 3000 U/min mit einem unteren Grenzwert unter 6500 U/min und einem oberen Grenzwert über 9000 U/min zu entwickeln;
- die umkehrbare elektrische Maschine (56) ist geeignet, in einem Schaltübergangszustand 5 Sekunden lang ein Drehmoment von mehr als 50 Nm in einem Drehzahlbereich von mehr als 5500 U/min mit einem unteren Grenzwert unter 5000 U/min und einem oberen Grenzwert über 10000 U/min zu entwickeln.

4. Hybrid-Unterbaugruppe (10) nach einem der vorhergehenden Ansprüche, **dadurch gekennzeichnet, dass** die Kupplungsvorrichtung (58) in der Zwischenkupplungsposition die Ausgangswelle (57) der umkehrbaren elektrischen Maschine (56) mit einem Zwischenübersetzungsverhältnis kinematisch mit der Zwischenwelle (26) verbindet, die Kupplungsvorrichtung (58) in der sekundären Kupplungsposition die umkehrbare elektrische Maschine (56) kinematisch mit der sekundären Welle (16) mit einem sekundären Übersetzungsverhältnis verbindet, und dass mindestens eines der folgenden Kriterien erfüllt ist:
- das sekundäre Übersetzungsverhältnis ist größer als 6 und vorzugsweise größer oder gleich 8;
- das Zwischenübersetzungsverhältnis ist größer als 4 und vorzugsweise größer oder gleich 6 zwischen der Zwischenwelle (26) und der Ausgangswelle (57) der umkehrbaren elektrischen Maschine (56);
- das sekundäre Übersetzungsverhältnis ist strikt größer als das Zwischenübersetzungsverhältnis, vorzugsweise mit einem Faktor größer oder gleich 1,5 zwischen dem sekundären Übersetzungsverhältnis und dem Zwischenübersetzungsverhältnis.

5. Hybrid-Unterbaugruppe (10) nach Anspruch 4, **dadurch gekennzeichnet, dass** die Kupplungsvorrichtung (58) in einer zusätzlichen Zwischenkupplungsposition die umkehrbare elektrische Maschine (56) kinematisch mit der Zwischenwelle (26) mit einem zusätzlichen Zwischenübersetzungsverhältnis verbindet, das sich von dem Zwischenübersetzungsverhältnis unterscheidet.

6. Hybrid-Unterbaugruppe (10) nach einem der vorhergehenden Ansprüche, **dadurch gekennzeichnet, dass** sie außerdem ein Zapfwellenorgan (168) aufweist, das geeignet ist, zumindest von der umkehrbaren elektrischen Maschine (56) angetrieben zu werden, vorzugsweise auf eine der folgenden Arten:
- das Zapfwellenorgan (168) ist kinematisch dauerhaft mit der Zwischenwelle (26) verbunden;
- das Zapfwellenorgan (168) ist über die Kupplungsvorrichtung (58) in der Zwischenkupplungsposition kinematisch mit der Ausgangswelle (57) der umkehrbaren elektrischen Maschine (56) verbunden.

7. Hybrid-Unterbaugruppe nach einem der vorhergehenden Ansprüche, **dadurch gekennzeichnet, dass** die Kupplungsvorrichtung (58) einen Planetenradsatz (564) aufweist, der kinematisch zwischen der Ausgangswelle (57) und der Sekundärwelle (16) angeordnet ist.

8. Hybrid-Unterbaugruppe nach einem der vorhergehenden Ansprüche, **dadurch gekennzeichnet, dass** die Kupplungsvorrichtung (58) einen oder mehrere der folgenden Kupplungsmechanismen aufweist:
- einen Klauenmechanismus (59, 159),
- einen Synchronisationsmechanismus,
- einen Kupplungsmechanismus (259, 359), vorzugsweise einen Reibungskupplungsmechanismus, vorzugsweise nass,
- eine Doppel-Reibungskupplung (259), vorzugsweise nass,
- eine Dreifach-Reibungskupplung (359), vorzugsweise nass.

9. Hybrid-Unterbaugruppe (10) nach einem der vorhergehenden Ansprüche, **dadurch gekennzeichnet, dass** die Elektromotorgruppe zwei umkehrbare elektrische Maschinen (56a, 56b) aufweist, die jeweils einen Rotor mit einer um eine Drehachse (X1, X2) rotierenden Ausgangswelle (57) aufweisen, wobei die beiden Ausgangswellen (57) gleichzeitig in ein gemeinsames Zahnrad (110) eingreifen, das parallel zu den beiden Drehachsen (X1, X2) angeordnet ist, wobei das gemeinsame Zahnrad (110) direkt oder indirekt über eine Verzahnung drehkinematisch mit der Kupplungsvorrichtung (58) verbunden ist.

10. Hybrid-Unterbaugruppe (10) nach einem der Ansprüche 1 bis 8, **dadurch gekennzeichnet, dass** sie eine Steuereinheit (76) für die umkehrbare elektrische Maschine (56) und die Kupplungsvorrichtung (58) sowie Sensoren (78, 80, 82) aufweist, die geeignet sind, ein Signal zu erzeugen, das für eine Drehzahl der Zwischenwelle (26) oder eines mit ihr kinematisch verbundenen Organs repräsentativ ist, ein Signal, das für eine Drehzahl der Sekundärwelle (16) oder eines mit ihr kinematisch verbundenen Organs repräsentativ ist, und ein Signal, das für eine Drehzahl der umkehrbaren elektrischen Maschine (56) oder eines mit ihr kinematisch verbundenen Organs repräsentativ ist.

11. Hybridmotorgruppe mit einem Hauptmotor (14), vorzugsweise einem Verbrennungsmotor, mit einer Hauptantriebswelle, **dadurch gekennzeichnet, dass** sie darüber hinaus eine Hybrid-Unterbaugruppe (10) nach einem der vorhergehenden Ansprüche aufweist, wobei die Hauptantriebswelle direkt oder über eine Kupplung (20) oder einen Drehmomentwandler mit der Primärwelle (12) verbunden ist.

12. Verfahren zum Hybridantrieb eines Fahrzeugs mit einer Hybridmotorgruppe nach Anspruch 11, **dadurch gekennzeichnet, dass** mit einer Steuereinheit (76) der Kupplungsvorrichtung (58) einer oder mehrere der folgenden Betriebsmodi angesteuert werden:
- ein Übergangsmodus zur Aufrechterhaltung der Traktion bei einem Gangwechsel, bei dem die Kupplungsvorrichtung (58) in der sekundären Kupplungsposition positioniert wird, der Hauptmotor (14) von der Zwischenwelle (26) entkuppelt wird und die umkehrbare elektrische Maschine (56) so gesteuert wird, dass ein Drehmoment an der Sekundärwelle (16) erzeugt wird oder eine Drehzahländerung der Sekundärwelle (16) minimiert wird, während ein Gangwechsel des Getriebes (18) gesteuert wird;
- ein rein regenerativer Verzögerungsmodus ohne die Zwischenwelle (26), bei dem die Kupplungsvorrichtung (58) in der sekundären Kupplungsposition positioniert wird, die Sekundärwelle (16) von der Zwischenwelle (26) entkuppelt wird und mit der als Generator arbeitenden umkehrbaren elektrischen Maschine (56) elektrische Energie erzeugt wird;
- ein direkter elektrischer Antriebsmodus ohne die Zwischenwelle (26), bei dem die Kupplungsvorrichtung (58) in der sekundären Kupplungsposition positioniert ist, die Zwischenwelle (26) von der sekundären Welle (16) entkuppelt ist und die umkehrbare elektrische Maschine (56) antreibend ist.

13. Verfahren zum Hybridantrieb nach dem vorhergehenden Anspruch, **dadurch gekennzeichnet, dass** mit der Steuereinheit (76) einer oder mehrere der folgenden Betriebsmodi angesteuert werden:
- ein Verstärkungsmodus, bei dem das Getriebe (18) eines der Übersetzungsverhältnisse zwischen der Primärwelle (12) und der Sekundärwelle (16) über die Zwischenwelle (26) herstellt, der Hauptmotor (14) so versorgt wird, dass er die Primärwelle (12) antreibt und ein Hauptdrehmoment auf die Zwischenwelle (26) ausübt, die Kupplungsvorrichtung (58) in der Zwischenkupplungsposition positioniert ist und die umkehrbare elektrische Maschine (56) ein Verstärkungsdrehmoment auf der Zwischenwelle (26) erzeugt, das das gleiche Vorzeichen wie das Hauptdrehmoment hat;
- ein Lademodus, bei dem das Getriebe (18) so positioniert ist, dass es die Primärwelle (12) mit der Zwischenwelle (26) verbindet, der Hauptmotor (14) so versorgt wird, dass er die Primärwelle (12) antreibt und ein Hauptdrehmoment auf die Zwischenwelle (26) ausübt, die Kupplungsvorrichtung (58) in der Zwischenkupplungsposition positioniert wird und kinetische Energie mit der umkehrbaren elektrischen Maschine (56), die als Generator arbeitet, in elektrische Energie umgewandelt wird;
- ein Übergangsmodus zur Synchronisation der Zwischenwelle (26) bei einem Wechsel eines der Übersetzungsverhältnisse des Getriebes (18), bei dem die Kupplungsvorrichtung (58) in der Zwischenkupplungsposition positioniert wird, der Hauptmotor (14) von der Zwischenwelle (26) abgekuppelt wird, dann die umkehrbare elektrische Maschine (56) so gesteuert wird, dass die Zwischenwelle (26) auf eine Solldrehzahl gebracht wird, die den Eingriff des Sekundärzahnrads ermöglicht, bevor der Hauptmotor (14) wieder mit der Zwischenwelle (26) gekuppelt wird;
- ein indirekter elektrischer Antriebsmodus, bei dem die Kupplungsvorrichtung (58) in der Zwischenkupplungsposition positioniert wird und der Hauptmotor (14) von der Zwischenwelle (26) entkuppelt wird, während die Zwischenwelle (26) kinematisch mit der Sekundärwelle (16) verbunden ist, und dann die umkehrbare elektrische Maschine in Abhängigkeit von einem Geschwindigkeits-Sollwert des Fahrzeugs gesteuert wird;
- ein regenerativer Bremsmodus durch die Zwischenwelle (26), bei dem die Kupplungsvorrichtung (58) in der Zwischenkupplungsposition positioniert ist, die Hauptantriebswelle (12) von der Zwischenwelle (26) entkuppelt ist und die umkehrbare elektrische Maschine (56) so angesteuert wird, dass sie als Generator arbeitet;
- ein Hybridmotor-Bremsmodus, bei dem die Kupplungsvorrichtung (58) in der Zwischenkupplungsposition positioniert wird, eines der Übersetzungsverhältnisse zwischen der Primär- und der Sekundärwelle (16), das über die Zwischenwelle (26) verläuft, eingelegt ist, die Primärwelle (12) kinematisch mit der Hauptantriebswelle verbunden ist, und kinetische Energie mit der umkehrbaren elektrischen Maschine (56), die als Generator arbeitet, in elektrische Energie umgewandelt wird, und kinetische Energie mit dem Hauptmotor, der ein Widerstandsmoment entwickelt, in Wärme umgewandelt wird;
- ein Modus zum Antreiben einer Zapfwelle (168), bei dem die Kupplungsvorrichtung (58) in der Zwischenkupplungsposition positioniert wird und der Hauptmotor von der Zwischenwelle und die Zwischenwelle (26) von der Sekundärwelle (16) abgekuppelt wird, und dann die umkehrbare elektrische Maschine (56) gesteuert wird, um eine Zapfwelle (168) anzutreiben, die mit der Zwischenwelle (26) gekoppelt ist.

## Claims

1. Hybrid sub-assembly (10) for driving a vehicle, having:
- at least one primary shaft (12);
- at least one secondary shaft (16);
- a transmission gearbox (18) comprising at least one intermediate shaft (26) different from the primary shaft (12) and the secondary shaft (16) and sets of gear wheels (38, 28, 40, 30, 32, 42, 36, 48, 44, 46) for obtaining a plurality of gear ratios between the primary shaft (12) and the secondary shaft (16) via the intermediate shaft (26);
- an electromotive unit comprising at least one reversible electric machine (56), and a coupling device (58) which, in at least one intermediate coupling position, kinematically connects an output shaft (57) of the reversible electric machine (56) to the intermediate shaft (26),
wherein the coupling device (58), in a secondary coupling position, kinematically connects the output shaft (57) of the reversible electric machine (56) to the secondary shaft (16) without going via the intermediate shaft (26) and,
wherein the coupling device (58) comprises at least one coupling mechanism (59, 159, 259, 359) permanently kinematically connected to the output shaft (57) of the reversible electric machine (56), an intermediate speed reducer (260, 360) permanently kinematically connected to the intermediate shaft (26) and a secondary speed reducer (264, 564) permanently kinematically connected to the secondary shaft (16),
**characterized in that** the secondary speed reducer (264, 564) comprises a reversing gear wheel (66) rotationally guided by a guide bearing (69) that is coaxial with the intermediate shaft (26).

2. Hybrid sub-assembly (10) according to Claim 1, **characterized in that** the coupling device (58), in at least one uncoupling position, kinematically uncouples the output shaft (57) of the reversible electric machine (56) simultaneously from the intermediate shaft (26) and the secondary shaft (16).

3. Hybrid sub-assembly (10) according to any one of the preceding claims, having one or more of the following features:
- the reversible electric machine (56) is capable of continuously providing a driving torque of greater than 300 Nm over a range of speeds spanning more than 1000 rpm, between a lower limit below 6000 rpm and an upper limit above 6000 rpm;
- the reversible electric machine (56) is capable of providing a resistive torque of greater than 400 Nm, over a range of speeds spanning more than 3000 rpm, between a lower limit below 6500 rpm and an upper limit above 9000 rpm, for 30 seconds;
- the reversible electric machine (56) is capable of providing a driving torque of greater than 50 Nm, over a range of speeds spanning more than 5500 rpm, between a lower limit below 5000 rpm and an upper limit above 10000 rpm, for 5 seconds in a transient gear change phase.

4. Hybrid sub-assembly (10) according to any one of the preceding claims, **characterized in that**, in the intermediate coupling position, the coupling device (58) kinematically connects the output shaft (57) of the reversible electric machine (56) to the intermediate shaft (26) with an intermediate gear ratio, in the secondary coupling position, the coupling device (58) kinematically connects the reversible electric machine (56) to the secondary shaft (16) with a secondary gear ratio, and **in that** at least one of the following criteria is met:
- the secondary gear ratio is greater than 6, preferably greater than or equal to 8;
- the intermediate gear ratio is greater than 4, preferably greater than or equal to 6, between the intermediate shaft (26) and the output shaft (57) of the reversible electric machine (56);
- the secondary gear ratio is strictly greater than the intermediate gear ratio, preferably with a factor greater than or equal to 1.5 between the secondary gear ratio and the intermediate gear ratio.

5. Hybrid sub-assembly (10) according to Claim 4, **characterized in that**, in an additional intermediate coupling position, the coupling device (58) kinematically connects the reversible electric machine (56) to the intermediate shaft (26) with an additional intermediate gear ratio that is different from the intermediate gear ratio.

6. Hybrid sub-assembly (10) according to any one of the preceding claims, **characterized in that** it further comprises a power take-off member (168) that can be driven by at least the reversible electric machine (56), preferably in one of the following manners:
- the power take-off member (168) is permanently kinematically connected to the intermediate shaft (26);
- the power take-off member (168) is kinematically connected to the output shaft (57) of the reversible electric machine (56) by the coupling device (58) in the intermediate coupling position.

7. Hybrid sub-assembly according to any one of the preceding claims, **characterized in that** the coupling device (58) comprises a planetary gearset (564) arranged kinematically between the output shaft (57) and the secondary shaft (16).

8. Hybrid sub-assembly according to any one of the preceding claims, **characterized in that** the coupling device (58) comprises one or more of the following coupling mechanisms:
- a dog mechanism (59, 159),
- a synchronizer mechanism,
- a clutch mechanism (259, 359), preferably a friction clutch mechanism, preferably a wet friction clutch mechanism,
- a double friction clutch (259), preferably a wet double friction clutch,
- a triple friction clutch (359), preferably a wet triple friction clutch.

9. Hybrid sub-assembly (10) according to any one of the preceding claims, **characterized in that** the electromotive unit comprises two reversible electrical machines (56a, 56b) each comprising a rotor with an output shaft (57) rotating about an axis of rotation (X1, X2), the two output shafts (57) meshing simultaneously with a common toothed wheel (110) arranged parallel to the two axes of rotation (X1, X2), said common toothed wheel (110) being kinematically linked in rotation, directly or indirectly via a gear, to the coupling device (58).

10. Hybrid sub-assembly (10) according to one of the claims 1 to 8, **characterized in that** it comprises a control unit (76) for controlling the reversible electric machine (56) and the coupling device (58), and sensors (78, 80, 82) capable of generating a signal representative of a speed of revolution of the intermediate shaft (26) or of a member kinematically connected thereto, a signal representative of a speed of revolution of the secondary shaft (16) or of a member kinematically connected thereto, and a signal representative of a speed of revolution of the reversible electric machine (56) or of a member kinematically connected thereto.

11. Hybrid engine unit comprising a main engine (14), preferably an internal combustion engine, with a main drive shaft, **characterized in that** it further comprises a hybrid sub-assembly (10) according to any one of the preceding claims, the main drive shaft being connected to the primary shaft (12) directly or via a clutch (20) or a torque converter.

12. Hybrid drive method for a vehicle comprising a hybrid engine unit according to claim 11, **characterized in that**, with a control unit (76) for controlling the coupling device (58), one or more of the following operating modes are managed:
- a transient mode in which traction is maintained during a gear shift, in which the coupling device (58) is placed in the secondary coupling position, the main engine (14) is uncoupled from the intermediate shaft (26), and the reversible electric machine (56) is ordered to generate a driving torque on the secondary shaft (16) or to minimize a variation in speed of the secondary shaft (16) when a change in gear ratio of the transmission gearbox (18) is ordered;
- a mode of pure regenerative deceleration without the intermediate shaft (26), in which the coupling device (58) is placed in the secondary coupling position, the secondary shaft (16) is uncoupled from the intermediate shaft (26) and electrical energy is generated with the reversible electric machine (56) operating as a generator;
- a mode of direct electric drive without the intermediate shaft (26), in which the coupling device (58) is placed in the secondary coupling position, the intermediate shaft (26) is uncoupled from the secondary shaft (16) and the reversible electric machine (56) provides the drive.

13. Hybrid drive method according to the preceding claim, **characterized in that**, with the control unit (76), one or more of the following operating modes are managed:
- a reinforcement mode, in which the transmission gearbox (18) produces one of the gear ratios between the primary shaft (12) and the secondary shaft (16), via the intermediate shaft (26), the main engine (14) is supplied with power so as to drive the primary shaft (12) and exert a main driving torque on the intermediate shaft (26), the coupling device (58) is placed in the intermediate coupling position, and the reversible electric machine (56) generates a reinforcement driving torque on the intermediate shaft (26), with the same sign as the main driving torque;
- a charging mode, in which the transmission gearbox (18) is positioned so as to connect the primary shaft (12) to the intermediate shaft (26), the main engine (14) is supplied with power so as to drive the primary shaft (12) and exert a main driving torque on the intermediate shaft (26), the coupling device (58) is placed in the intermediate coupling position, and kinetic energy is converted to electrical energy with the reversible electric machine (56) operating as a generator;
- a transient mode of synchronization of the intermediate shaft (26) during a shift in one of the gear ratios of the transmission gearbox (18), in which the coupling device (58) is placed in the intermediate coupling position, the main engine (14) is uncoupled from the intermediate shaft (26), then the reversible electric machine (56) is ordered to bring the intermediate shaft (26) to a speed setpoint allowing engagement of the secondary gear wheel before recoupling the main engine (14) to the intermediate shaft (26);
- an indirect electric drive mode, in which the coupling device (58) is placed in the intermediate coupling position and the main engine (14) is uncoupled from the intermediate shaft (26), while the intermediate shaft (26) is kinematically connected to the secondary shaft (16), then the reversible electric machine is controlled according to a speed setpoint of the vehicle;
- a mode of regenerative braking via the intermediate shaft (26), in which the coupling device (58) is placed in the intermediate coupling position, the main drive shaft (12) is uncoupled from the intermediate shaft (26) and the reversible electric machine (56) is ordered to operate as a generator;
- a hybrid drive braking mode, in which the coupling device (58) is placed in the intermediate coupling position, one of the gear ratios between the primary shaft and the secondary shaft (16) via the intermediate shaft (26) being engaged, the primary shaft (12) being kinematically connected to the main drive shaft, and kinetic energy is converted to electrical energy with the reversible electric machine (56) operating as a generator and kinetic energy is converted to heat with the main engine providing a resistive torque;
- a power take-off (68) drive mode, in which the coupling device (58) is placed in the intermediate coupling position and the main engine is uncoupled from the intermediate shaft, the intermediate shaft (26) from the secondary shaft (16), then the reversible electric machine (56) is ordered to drive a power take-off (68) coupled to the intermediate shaft (26).
